# EUROPÄISCHE PATENTSCHRIFT

(11) **EP 2 519 745 B1**
(45) Veröffentlichungstag und Bekanntmachung des Hinweises auf die Patenterteilung: **08.04.2015**
(21) Anmeldenummer: 10778867.1
(22) Anmeldetag: 04.11.2010
(51) Int. Cl.: F04D 25/04, F04D 25/06, F04D 29/051, F04D 29/057, F04D 29/058, F04D 29/58, F02C 6/12, F16C 17/12, F16C 39/06

(54) **AUFLADEEINRICHTUNG**
SUPERCHARGING DEVICE
DISPOSITIF DE SURALIMENTATION

(30) Priorität: 12.11.2009 DE 102009052919
(43) Veröffentlichungstag der Anmeldung: 07.11.2012
(73) Patentinhaber: Liebherr-Aerospace Toulouse SAS, 31200 Toulouse (FR)
(72) Erfinder: AURY, Jerôme, F-81600 Montans (FR); KNOOP, Andreas, 73728 Esslingen (DE); LEITZ, Jürgen, 73265 Dettingen (DE); SCHABEL, Hans-Jörg, 72762 Reutlingen (DE)
(74) Vertreter: Herrmann, Uwe
(86) Internationale Anmeldenummer: PCT/EP2010/006725
(87) Internationale Veröffentlichungsnummer: WO 2011/057738

(56) Entgegenhaltungen:
- EP-A1- 0 694 696
- EP-A2- 1 840 393
- EP-A2- 2 012 019
- WO-A1-91/17361
- WO-A1-93/07388
- JP-A- 57 154 516

## Beschreibung

Die Erfindung betrifft eine Aufladeeinrichtung zum Verdichten eines gasförmigen Mediums der im Oberbegriff des Patentanspruchs 1 angegebenen Art.

Eine solche Aufladeeinrichtung is z.B. aus der JP-A-57154516 bekannt.

Die US 2007/0069597 A1 offenbart eine Versorgungseinrichtung für eine Brennstoffzelle, mittels welcher die Brennstoffzelle mit verdichteter Luft versorgbar ist, umfassend einen in einem Gehäuse aufgenommenen Radialverdichter und eine Lagerungseinrichtung zur Lagerung einer Welle des Verdichters, wobei die Lagerungseinrichtung ein Paar von Radialfolienlagern umfasst, die koaxial mit der Welle angeordnet sind, um die Welle in radialer Richtung zu stützen.

Die genannten Radialfolienlager stellen dabei eine Art von Luftlagern dar, wobei insbesondere Luftlager zur axialen Lagerung der Welle sehr hohe Reibungsverluste aufweisen. Der Anteil der Reibungsverluste dieser axialen Luftlagerungen beträgt in etwa 2/3 der gesamten Reibungsverluste der Lagerung, was einen effizienten Betrieb der Versorgungseinrichtung sehr negativ beeinflusst.

Aus der DE 100 05 246 C1 ist ein Abgasturbolader mit einer in einem Gehäuse aufgenommenen Lagerungseinrichtung zur Abstützung einer Welle eines Verdichters bekannt, wobei die Lagerungseinrichtung als aktive Magnetlagerung mit einem bestrombaren Elektromagneten ausgebildet ist, der die Welle des Verdichters mit einer magnetischen Stützkraft beaufschlagt. Die Abgasturbine des Abgasturboladers weist eine variabel einstellbare Turbinengeometrie auf, wobei eine Kraft-Messeinrichtung zur Messung der auf die Welle wirkenden Axialkräfte vorgesehen ist. Des Weiteren ist das in der Kraft-Messeinrichtung erzeugte Messsignal einer Regel- und Steuereinheit zuführbar, in der ein die variable Turbinengeometrie beaufschlagendes Stellsignal in Abhängigkeit des Messsignals erzeugbar ist.

Dieser Abgasturbolader weist ebenfalls weiteres Potential zur Verbesserung der Lagerung der Welle auf.

In der EP 1 171 944 B1 ist eine Rotoreinrichtung zur Interaktion eines Rotors mit einem Fluid beschrieben, wobei die Rotoreinrichtung ein Trägerrohr hat, in welchem ein Rotor drehbar gelagert ist. Der Rotor ist für die Interaktion mit dem durch das Trägerrohr strömenden Fluid ausgebildet und weist an beiden Stirnseiten axial magnetisierte permanentmagnetische Rotormagnete auf. Den Stirnseiten des Rotors axial unmittelbar gegenüberliegend sind mit dem Trägerrohr verbundene, permanentmagnetische Statormagnete angeordnet, und jeder Statormagnet hat eine solche axiale Magnetisierung, dass sich benachbarte Stator- und Rotormagnete gegenseitig anziehen. Des Weiteren weist die Rotoreinrichtung eine magnetische Axialstabilisiereinrichtung für den Rotor auf.

Auch die aus dieser Druckschrift bekannte Rotoreinrichtung birgt Defizite in der Lagerung, die eine Ausfallwahrscheinlichkeit der Rotoreinrichtung in unerwünschter Weise erhöhen und einen effizienten Betrieb negativ beeinflussen.

Es ist daher Aufgabe der vorliegenden Erfindung, eine Aufladeeinrichtung zum Verdichten eines gasförmigen Mediums sowie ein Verdichterrad für eine Aufladeeinrichtung zum Verdichten eines gasförmigen Mediums und ein Turbinenrad für eine Turbine einer Aufladeeinrichtung zum Verdichten eines gasförmigen Mediums bereitzustellen, welche eine verbesserte Lagerung für die Aufladeeinrichtung sowie einen effizienteren Betrieb derselbigen ermöglichen.

Diese Aufgabe wird durch eine Aufladeeinrichtung zum Verdichten eines gasförmigen Mediums mit den Merkmalen des Patentanspruchs 1 gelöst. Vorteilhafte Ausgestaltungen mit zweckmäßigen und nicht-trivialen Weiterbildungen der Erfindung sind in den abhängigen Ansprüchen angegeben.

Die Erfindung betrifft eine Aufladeeinrichtung zum Verdichten eines gasförmigen Mediums, insbesondere Luft, wobei insbesondere eine Brennstoffzelle mit von der Aufladeeinrichtung verdichteter Luft versorgbar ist, wobei die Aufladeeinrichtung ein Gehäuse sowie eine von dem Gehäuse aufgenommene Welle umfasst, welche in dem Gehäuse radial mittels einer Luftlagerungseinrichtung gelagert ist. Erfindungsgemäß ist nun vorgesehen, dass die Welle in dem Gehäuse axial ausschließlich mittels einer Magnetlagerungseinrichtung gelagert ist.

Wie bereits eingangs beschrieben, birgt insbesondere die aus dem Stand der Technik bekannte axiale Lagerung der Welle großes Potential zur Verbesserung dieser Lagerung sowie zur Reduzierung von Reibungsverlusten, was zu einem effizienteren Betrieb der Aufladeeinrichtung führt. Diese Verbesserung ist erfindungsgemäß nun durch die axiale Lagerung mittels der Magnetlagerungseinrichtung realisiert, welche äußerst geringe Reibungsverluste bei gleichzeitiger definierter und fester Lagerung der Welle in axialer Richtung ermöglicht. Zusätzliche Lagerungseinrichtungen zur axialen Lagerung der Welle sind dabei nicht vonnöten, was einerseits die Reibungsverluste und andererseits das Gesamtgewicht der Aufladeeinrichtung gering hält. Dies ermöglicht einen besonders effizienten Betrieb der Aufladeeinrichtung.

Bei der erwähnten radialen Lagerung der Welle mittels der Luftlagerungseinrichtung handelt es sich beispielsweise um eine Lagerungseinrichtung, bei der die Welle mittels Luft gelagert ist, wobei beispielsweise auch eine Folienluftlagerung vorgesehen sein kann.

Die axiale Lagerung der Welle mittels der Magnetlagerungseinrichtung ist durch Magnete realisiert, wodurch vor allem durch eine Verdichtung des zu verdichtenden Mediums entstehende Axialkräfte mit Hilfe von passiven Permant-Magnetlagern abgestützt werden, d.h. es dienen keine Sensoren, keine Regelung und keine Elektromagnete als Hilfsmittel. In diesem Zusammenhang sind beispielsweise sich gegenseitig abstoßende (repulsive) Magnete einsetzbar als auch solche, die sich gegenseitig anziehen (attraktiv).

In jeglicher Hinsicht erlaubt die Magnetlagerungseinrichtung eine kontaktfreie Lagerung der Welle in axialer Richtung, was die Reibungsverluste gering hält und damit einen hohen Wirkungsgrad der Aufladeeinrichtung ermöglicht.

Zum Verdichten des gasförmigen Mediums weist die Aufladeeinrichtung beispielsweise einen Verdichter auf, der als Radialverdichter ausgebildet ist und ein mit der Welle drehfest verbundenes Verdichterrad umfasst.

Ebenso möglich ist, dass die Aufladeeinrichtung eine elektrische Maschine, beispielsweise einen elektrischen Motor aufweist, mittels welchem die Welle der Aufladeeinrichtung antreibbar ist. Damit ist ein elektrisch angetriebener Turbolader (ETC-Electrical Turbo Charger) geschaffen, mittels welchem bedarfsgerecht das gasförmige Medium, beispielsweise die Luft für die Brennstoffzelle, verdichtbar und beispielsweise der Brennstoffzelle zuführbar ist.

Des Weiteren kann vorgesehen sein, dass die Aufladeeinrichtung eine Turbine aufweist, welche wiederum ein mit der Welle drehfest verbundenes Turbinenrad umfasst, wobei die Turbine und damit das Turbinenrad mit einem gasförmigen Medium, beispielsweise mit einem Abgas der Brennstoffzelle, beaufschlagbar sind. Dadurch ist die durch das gasförmige Medium, beispielsweise durch das Abgas der Brennstoffzelle, transportierte Energie zum Antreiben der Welle und damit zum Verdichten des gasförmigen Mediums nutzbar, was den Gesamtwirkungsgrad der Aufladeeinrichtung sowie eines Fahrzeugs mit dieser Aufladeeinrichtung deutlich ansteigen lässt.

Es versteht sich, dass sowohl zum Verdichten des gasförmigen Mediums als auch gegebenenfalls zur Beaufschlagung der Turbine und des Turbinenrades mit dem anderweitigen gasförmigen Medium entsprechende Fluten und/oder Strömungskanäle in dem Gehäuse bzw. einem jeweils der Welle, dem Verdichter und gegebenenfalls der Turbine zugeordneten Gehäuse bzw. Gehäuseteil, die miteinander verbunden sind, vorgesehen sind.

Die Magnetlagerungseinrichtung ist in einem Endabschnitt der Welle angeordnet, welcher gegenüber eines weiteren Endabschnitts der Welle liegt, in welchem ein Laufrad, beispielsweise das Verdichterrad und/oder das Turbinenrad, drehfest mit dieser verbunden angeordnet ist.

Die Erfindung betrifft weiter eine Aufladeeinrichtung zum Verdichten eines gasförmigen Mediums, welche ein Gehäuse sowie ein von dem Gehäuse aufgenommenes Laufzeug aufweist, welches eine Welle und zumindest zwei mit dieser drehfest verbundene Laufräder umfasst und welches in dem Gehäuse mittels einer Lagerungseinrichtung gelagert ist, wobei erfindungsgemäß vorgesehen ist, dass das Laufzeug fliegend in dem Gehäuse gelagert ist.

An dieser Stelle sei angemerkt, dass es sich bei einem der Laufräder beispielsweise um ein Verdichterrad handelt, mittels welchem das in Zusammenhang mit dem ersten Aspekt der Erfindung beschriebene, gasförmige Medium, beispielsweise Luft, welche beispielsweise der Brennstoffzelle zuführbar ist, verdichtbar ist. Das andere der Laufräder ist beispielsweise als Turbinenrad ausgebildet, mittels welchem das Laufzeug antreibbar ist.

Durch die fliegende Lagerung des Laufzeugs ist eine Lagerungsanordnung geschaffen, wobei die Laufräder in axialer Richtung der Welle in einem Endabschnitt der Welle drehfest mit der Welle verbunden sind. Ausgehend von dem in axialer Richtung diesem Endabschnitt gegenüberliegenden Endabschnitt der Welle ergibt sich daraus eine Lagerungseinrichtung, bei welcher zunächst ein Lager vorgesehen ist, mittels welchem die Welle gelagert ist, woraufhin sich in axialer Richtung der Welle an dieses erste Lager zur Lagerung der Welle beispielsweise ein weiteres, zweites Lager zur Lagerung der Welle anschließt. Das erste und das zweite Lager sind dabei beispielsweise in axialer Richtung der Welle voneinander beabstandet. An diese, durch das erste sowie gegebenenfalls das zweite Lager gebildete Lagerung schließen sich in axialer Richtung der Welle schließlich die Laufräder an, wodurch die fliegende Lagerung der Laufräder bzw. des gesamten Laufzeugs mit Laufrädern und Welle realisiert ist.

Diese fliegende Lagerung birgt einerseits den Vorteil, dass das Laufzeug als gesamter Verbund gewuchtet und montiert werden kann, was mit einer vereinfachten Montage einhergeht. Dies reduziert die Montagekosten und damit die Gesamtkosten der Aufladeeinrichtung. Bei Beachtung dynamischer Aspekte ist gleichzeitig eine besonders feste Lagerung des Laufzeugs realisierbar zur Darstellung eines effizienten Betriebs der Aufladeeinrichtung.

Das Turbinenrad ist vorteilhafterweise in axialer Richtung der Welle auf einer der in Zusammenhang mit dem zweiten Aspekt der Erfindung beschriebenen Lagerungseinrichtung abgewandten Seite des ersten Laufrads, welches beispielsweise als Verdichterrad ausgebildet ist, angeordnet. Damit birgt die fliegende Lagerung des Laufzeugs die vorteilhafte Möglichkeit, ein turbinenradseitiges Lager, also beispielsweise das zweite Lager der beschriebenen Lagerungseinrichtung, entfallen zu lassen. Dies ist insofern vorteilbehaftet, als das Turbinenrad mit einem gasförmigen Medium mit einem hohen Energiegehalt insbesondere in Form von Wärmeenergie beaufschlagt wird, wodurch ein turbinenseitiges bzw. turbinenradseitiges Lager mit hohen Temperaturen belastet werden würde. Durch die fliegende Lagerung und gar durch den Entfall des turbinenseitigen Lagers ist diese hohe Temperaturbelastung vermieden, was die Ausfallwahrscheinlichkeit der Aufladeeinrichtung absenkt und den effizienten Betrieb derselbigen begünstigt.

Zusammenfassend ist zu der Erfindung zu sagen, dass die Laufräder in axialer Richtung der Welle nicht beidseitig gelagert sind, und auch keine Lagerungseinrichtung in axialer Richtung der Welle zwischen den voneinander beabstandeten und koaxial angeordneten Laufrädern angeordnet ist, sondern vielmehr die Laufräder in einem Endabschnitt der Welle einerseits der Welle und die Lagerungseinrichtung andererseits der Welle angeordnet sind zur Realisierung der fliegenden Lagerung.

Des weiteren betrifft die Erfindung eine Aufladeeinrichtung zum Verdichten eines gasförmigen Mediums, wobei die Aufladeeinrichtung der Erfindung ein Gehäuse sowie ein von dem Gehäuse aufgenommenes Laufzeug umfasst, welches wiederum eine Welle und zumindest ein mit dieser drehfest verbundenes Verdichterrad umfasst und welches in dem Gehäuse mittels einer Lagerungseinrichtung gelagert ist, wobei erfindungsgemäß vorgesehen ist, dass eine Kühleinrichtung vorgesehen ist, mittels welcher das dem Verdichterrad zuzuführende, gasförmige und zu verdichtende Medium vor dessen Verdichtung zunächst der Lagerungseinrichtung und anschließend dem Verdichterrad zuführbar ist.

Dies erlaubt eine besonders effiziente und gute Kühlung der Lagerungseinrichtung, die beispielsweise als bereits in Zusammenhang mit dem ersten Aspekt der Erfindung beschriebene Luftlagerungseinrichtung ausgebildet ist. Dadurch, dass die Lagerungseinrichtung mittels des gasförmigen Mediums, also beispielsweise Luft, vor dessen Verdichtung in Kontakt bringbar und damit kühlbar ist, weist das gasförmige Medium eine niedrigere Temperatur als nach dessen Verdichtung auf, was eine Zwischenkühlung des gasförmigen Mediums zur Kühlung der Lagerungseinrichtung vermeidet.

Dies bedeutet eine Steigerung der Effizienz insbesondere der Lagerungseinrichtung und damit der gesamten Aufladeeinrichtung. Des Weiteren steht das gasförmige Medium gesamtheitlich der anschließenden Verdichtung zur Verfügung.

Würde die Lagerungseinrichtung mittels des bereits verdichteten gasförmigen Mediums gekühlt werden, so wäre nicht nur die bereits erwähnte Zwischenkühlung notwendig, sondern das für die Kühlzwecke abgezweigte, verdichtete, gasförmige Medium könnte seinem eigentlichen Zweck, beispielsweise der Brennstoffzelle, nicht mehr zur Verfügung gestellt werden, was den Gesamtwirkungsgrad der Aufladeeinrichtung verschlechtern würde. Diese Problematik ist durch die erfindungsgemäße Aufladeeinrichtung des dritten Aspekts der Erfindung vermieden, was also der effizienten Lagerung zuträglich ist zur Reduzierung der Ausfallwahrscheinlichkeit als auch dem Gesamtwirkungsgrad der Aufladeeinrichtung.

Die Erfindung betrifft weiter eine Aufladeeinrichtung mit einem Verdichterrad für eine Aufladeeinrichtung zum Verdichten eines gasförmigen Mediums, wobei das Verdichterrad eine Mehrzahl von im Wesentlichen auf einer in axialer Richtung des Verdichterrads weisenden Stirnseite des Verdichterrads angeordneten Radschaufeln aufweist. Erfindungsgemäß ist nun vorgesehen, dass die Radschaufeln zumindest teilweise in axialer Richtung des Verdichterrads von zumindest einem mit dem Verdichterrad drehfest verbundenen Abdeckelement überdeckt sind. Vorteilhafter Weise ist das Abdeckelement einstückig mit dem Verdichterrad ausgebildet, was die Teileanzahl und damit die Kosten für das Verdichterrad und damit für die gesamte Aufladeeinrichtung in einem geringen Rahmen hält.

Durch diese derartige Darstellung eines gedeckelten Verdichterrads ist es möglich, dass sich ein Auslassdruck eines entsprechenden Verdichters, in dem das Verdichterrad eingesetzt wird, sowohl auf einer vorderen Stirnseite als auch auf einer hinteren Stirnseite des Verdichterrades aufprägen kann, wodurch sich die entstehenden Kräfte aufheben. Somit wird das Verdichterrad nicht in eine bestimmte, ausgeprägte Richtung gedrückt. Resultierend ist es daher möglich, Steifigkeiten von Lagern zur Lagerung einer Welle, mit welcher das Verdichterrad drehfest verbunden ist, insbesondere Steifigkeiten von entsprechenden Axiallagern, geringer auszubilden, da durch das erfindungsgemäße Verdichterrad des vierten Aspekts der Erfindung infolge der Verdichtung durch das Verdichterrad geringere, von einem entsprechenden Lager aufzunehmende Axialkräfte entstehen. Dies reduziert sowohl die Kosten als auch das Gewicht für die Aufladeeinrichtung und erlaubt eine effizientere Gestaltung der beschriebenen Lagerung.

Die Erfindung betrifft weiter eine Aufladeeinrichtung mit einem Turbinenrad für eine Turbine einer Aufladeeinrichtung zum Verdichten eines gasförmigen Mediums, wobei das Turbinenrad mit einem gasförmigen Medium, insbesondere mit Abgas der Brennstoffzelle, beaufschlagbar ist.

Erfindungsgemäß ist vorgesehen, dass das Turbinenrad im Wesentlichen aus einem keramischen Werkstoff oder aus Titanaluminid ausgebildet ist. Das Turbinenrad weist somit eine nur sehr geringe Dichte und damit ein geringes spezifisches Gewicht auf, was ebenso der Lagerung einer Welle, mit welcher das Turbinenrad drehfest verbunden ist, zuträglich ist, da die Steifigkeit der Lagerung geringer ausgebildet werden kann.

Dies birgt die in diesem Zusammenhang bezüglich des vierten Aspekts der Erfindung bereits beschriebenen Vorteile. Des Weiteren weisen die genannten Werkstoffe eine geringe Wärmeleitung auf, wodurch ein ungewollter Transfer von Wärme vermieden wird. Dies ist insbesondere dann zuträglich, wenn, wie in Zusammenhang mit dem dritten Aspekt der Erfindung beschrieben, sowohl das Verdichterrad als auch das Turbinenrad in einem Endabschnitt der Welle angeordnet sind, da dann ein Wärmeübergang von dem mit dem heißen, gasförmigen Medium beaufschlagten Turbinenrad auf das Verdichterrad und damit eine ungewollte Erwärmung des gasförmigen, zu verdichtenden Mediums vermieden wird.

Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombination sind nicht nur in der jeweils angegebenen Kombination, sondern auch in anderen Kombinationen oder in Alleinstellung verwendbar, ohne den Rahmen der Erfindung zu verlassen, der durch die Ansprüche definiert wird.

Die Zeichnungen zeigen in:
- Fig. 1: eine Längsschnittansicht einer Ausführungsform einer Aufladeeinrichtung gemäß den Aspekten 1 bis 3 der Erfindung;
- Fig. 2: eine Längsschnittansicht einer weiteren Ausführungsform einer Aufladeeinrichtung gemäß den Aspekten 1 bis 3 der Erfindung;
- Fig. 3: ausschnittsweise eine vergrößerte Ansicht einer Kühleinrichtung der Aufladeeinrichtung gemäß Fig. 1;
- Fig. 4: eine perspektivische Ansicht einer Ausführungsform eines Verdichterrades gemäß dem vierten Aspekt der Erfindung;
- Fig. 5: eine schematische Darstellung eines mittels einer Aufladeeinrichtung aufgeladenen Systems, wobei als Aufladeeinrichtung eine der Aufladeeinrichtungen gemäß den Fig. 1 oder 2 einsetzbar ist;
- Fig. 6: eine schematische Darstellung eines mittels einer Aufladeeinrichtung aufgeladenen Systems, wobei als Aufladeeinrichtung eine der Aufladeeinrichtungen gemäß der Fig. 1 oder 2 einsetzbar ist; und
- Fig. 7: eine schematische Ansicht eines mittels einer Aufladeeinrichtung aufgeladenen Systems, wobei als Aufladeeinrichtung eine der Aufladeeinrichtungen gemäß den Fig. 1 oder 2 einsetzbar ist.

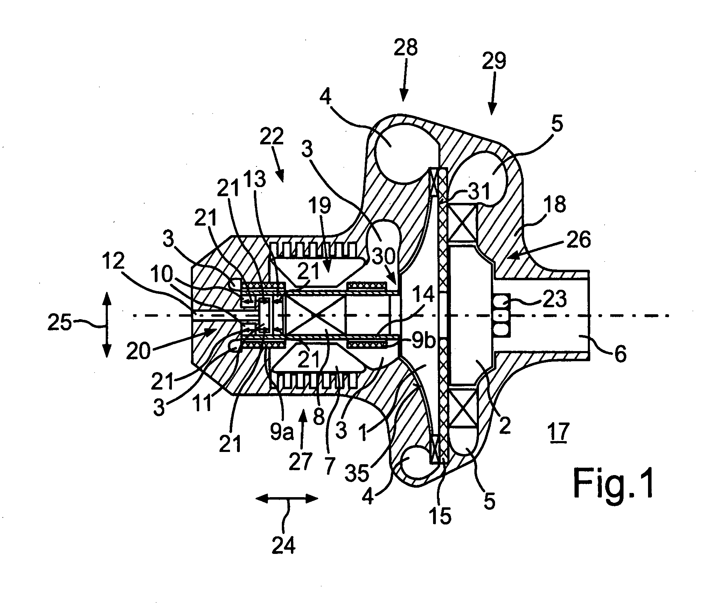

Die Fig. 1 zeigt eine Aufladeeinrichtung 17 zum Verdichten eines gasförmigen Mediums in Form von Luft für eine Brennstoffzelle, welche Sauerstoff der verdichteten Luft sowie ihr zugeführten Wasserstoff in Wasser und elektrische Energie umwandelt. Die Aufladeeinrichtung 17 umfasst ein Gehäuse 18 sowie eine von dem Gehäuse 18 aufgenommene Welle in Form einer Hohlwelle 14, welche in dem Gehäuse 18 radial mittels einer Luftlagerungseinrichtung 19 gelagert ist. Die Luftlagerungseinrichtung 19 umfasst dabei Luftlager 9a und 9b, die beispielsweise als Folienluftlager ausgebildet sind und die Hohlwelle 14 in dem Gehäuse 18 radial lagern.

Axial ist die Hohlwelle 14 in dem Gehäuse 18 ausschließlich mittels einer passiven Permant-Magnetlagerungseinrichtung 20 gelagert, wobei für diese axiale Lagerung der Hohlwelle 14 ein permanentmagnetischer Ringmagnet 10 sowie permanentmagnetische Scheibenmagnete 11 und 13 vorgesehen sind. Richtungspfeile 21 deuten dabei die Magnetisierungsrichtung der Scheibenmagnete 11 und 13 bzw. des Ringmagnets 10 an. Der Ringmagnet 10 sowie der Scheibenmagnet 13 sind dabei drehfest mit der Hohlwelle 14 der Aufladeeinrichtung 17 verbunden.

An dieser Stelle sei angemerkt, dass die Aufladeeinrichtung 17 einen elektrischen Motor 22 mit einem Motorstator 7 und mit einem permanentmagnetischen Motorrotor 8 umfasst, wobei der Motorrotor 8 drehfest mit der Hohlwelle 14 verbunden ist. Damit weist die Aufladeeinrichtung 17 die Form eines elektrisch angetriebenen Turboladers (ETC - Electrical Turbo Charger) auf, welcher die Luft für die Brennstoffzelle verdichtet. Dazu umfasst die Aufladeeinrichtung 17 ein Verdichterrad 1, welches drehfest mit der Hohlwelle 14 verbunden ist und welches über entsprechende Strömungskanäle 3 mit der zu verdichtenden Luft beaufschlagbar ist. Die von dem Verdichterrad 1 verdichtete Luft strömt über entsprechende Strömungskanäle 4 aus der Aufladeeinrichtung 17 aus und wird der Brennstoffzelle zugeführt.

An dieser Stelle wird deutlich, dass das Verdichterrad 1 also über die Hohlwelle 14 von dem elektrischen Motor 22 antreibbar ist. Des Weiteren ist das Verdichterrad 1 über ein ebenfalls drehfest mit der Hohlwelle 14 verbundenes Turbinenrad 2 antreibbar, welches über entsprechende Strömungskanäle 5 mit einem Abgas, also mit heißem Wasserdampf, der Brennstoffzelle, beaufschlagbar ist. Das Abgas der Brennstoffzelle trägt somit Energie in Form von Wärmeenergie und kann das Turbinenrad 2 antreiben.

Nach der Umwandlung der Energie des Abgases in mechanische Energie durch das Turbinenrad 2 strömt das Abgas der Brennstoffzelle über entsprechende Strömungskanäle 6 aus der Aufladeeinrichtung 17 aus. In axialer Richtung sind das Verdichterrad 1 sowie das Turbinenrad 2 mittels einer Mutter 23 auf der Hohlwelle 14 festgelegt. In axialer Richtung der Hohlwelle 14 gemäß einem Richtungspfeil 24 und damit in axialer Richtung der Aufladeeinrichtung 17 zwischen dem Verdichterrad 1 und dem Turbinenrad 2 ist eine keramische Isolationsscheibe 15 angeordnet, die einen Wärmeübergang von dem durch das heiße Abgas der Brennstoffzelle erwärmten Turbinenrad 2 auf das Verdichterrad 1 vermeidet.

Der Scheibenmagnet 11 der Magnetlagerungseinrichtung 20 ist über einen Bolzen 12 gehäusefest an dem Gehäuse 18 gehalten. Der Bolzen 12 erstreckt sich dabei parallel zur axialen Richtung gemäß dem Richtungspfeil 24 der Aufladeeinrichtung 17 und ist koaxial zur Hohlwelle 14 angeordnet.

Wie der Fig. 1 zu entnehmen ist, durchdringt der Bolzen 12 den Ringmagnet 10, wodurch die vorteilhafte Halterung des Scheibenmagnets 11 auch bei hoher Umdrehungsgeschwindigkeit der Welle 14 realisiert ist.

Die Magnetlagerungseinrichtung 20 nimmt dabei die in Folge der Verdichtung der Luft entstehenden Kräfte in axialer Richtung auf, während die Luftlager 9a und 9b entstehende Kräfte in radialer Richtung gemäß einem Richtungspfeil 25 der Aufladeeinrichtung 17 bzw. der Hohlwelle 14 aufnehmen.

Der Bolzen 12 weist dabei ein Gewinde auf und ist somit mit dem Gehäuse 18 entsprechend verschraubt, wodurch ein notwendiger Gehäusespalt zwischen dem Verdichterrad 1 und dem Turbinenrad 2 einstellbar ist.

Aufgrund der Tatsache, dass die Aufladeeinrichtung 17 sowohl ein Verdichterrad 1 als auch ein Turbinenrad 2 sowie die in dem Gehäuse 18 gelagerte Hohlwelle 14 aufweist, welche als Verbund ein Laufzeug 26 der Aufladeeinrichtung 17 darstellen, ist das Gehäuse 18 in ein Lagergehäuseteil 27, in ein Verdichtergehäuseteil 28 sowie in ein Turbinengehäuseteil 29 einzuteilen, wobei die Gehäuseteile 27, 28 und 29 auch separat voneinander ausgebildet und auf entsprechende Art und Weise miteinander verbunden sein können.

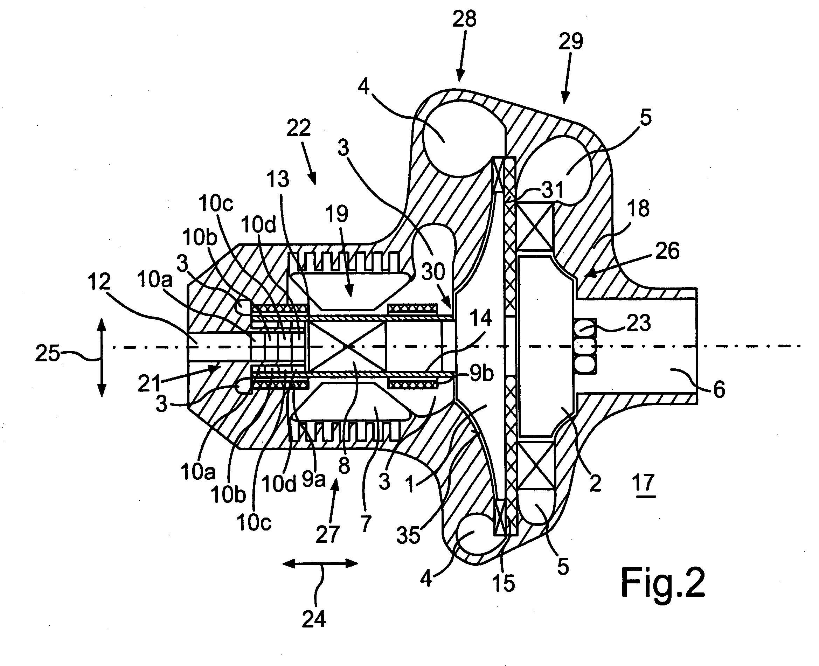

Die Fig. 2 zeigt eine weitere Ausführungsform der Aufladeeinrichtung 17, bei welcher die Magnetlagerungseinrichtung 20 nun Ringmagnete 10a - d aufweist, die drehfest mit der Hohlwelle 14 verbunden sind. Des Weiteren weist die Magnetlagerungseinrichtung 20 Scheibenmagnete 11a - d auf, die über den Bolzen 12 gehäusefest gehalten sind. Eine Ausführung der Ringmagnete 10a - d als Scheibenmagnete ist aber ebenso möglich. Bei der Magnetlagerungseinrichtung 20 gemäß der Fig. 2 ist es dabei möglich, ein System von sich gegenseitig abstoßenden oder von sich gegenseitig anziehenden Magneten einzusetzen.

Weiterhin ist es möglich, den magnetischen Fluss durch Bleche zwischen den Ringmagneten 10a - d bzw. zwischen den Scheibenmagneten 11a - d zu verbessern, wobei sich die Anordnung dieser Bleche auf die axiale Richtung gemäß dem Richtungspfeil 24 der Aufladeeinrichtung 17 bezieht. Die Steifigkeit der axialen Lagerung der Hohlwelle 14 bzw. des Laufzeugs ist durch eine Erhöhung der Anzahl der entsprechenden Ringmagnete 10a - d bzw. der Scheibenmagnete 11a - d möglich, was je nach Anwendungsfall und Belastung, also Axialkräften, geschehen sollte. Ansonsten trifft auf die Aufladeeinrichtung 17 gemäß Fig. 2 das zu der Aufladeeinrichtung 17 gemäß Fig. 1 Gesagte analog zu.

Die genannten axialen Kräfte werden also von den in der Fig. 1 und Fig. 2 gezeigten Magnetlagerungseinrichtungen 20 aufgenommen, wobei diese axialen Kräfte vor allem durch die Verdichtung des Mediums durch das Verdichterrad 1 entstehen. Bei dieser Verdichtung wird ein Verdichterauslassdruck auf eine Rückseite 31 des Verdichterrads 1 aufgeprägt, wodurch das Verdichterrad 1 in Richtung eines Verdichterradeintritts 30 und damit in Richtung der Magnetlagerungseinrichtung 20 gedrückt wird aufgrund einer durch diese Druckaufprägung entstehenden Kraft.

Die Steifigkeit der Magnetlagerungseinrichtung 20 muss nun so hoch sein, das die so entstehende Kraft bzw. die so entstehenden Kräfte aufgenommen werden können, ohne dass Radschaufeln des Verdichterrads 1 am Gehäuse 18 bzw. am Verdichtergehäuseteil 28 streifen.

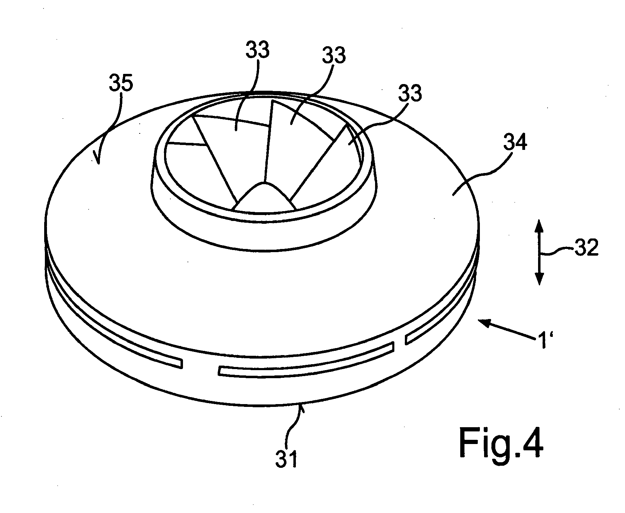

Diese Problematik und damit eine unverhältnismäßig hohe Steifigkeit der Magnetlagerungseinrichtung 20 ist derart vermeidbar, dass ein gedeckeltes Verdichterrad 1' (Fig. 4) bei der Aufladeeinrichtung 17 gemäß den Fig. 1 und/oder 2 eingesetzt wird. Bei dem Verdichterrad 1' gemäß Fig. 4 handelt es sich also um ein Verdichterrad für die Aufladeeinrichtung 17 mit einer Mehrzahl von auf einer in axialer Richtung gemäß einem Richtungspfeil 32 des Verdichterrads 1' weisenden Stirnseite des Verdichterrads 1' angeordneten Radschaufeln 33, wobei in der Fig. 4 lediglich drei dieser Radschaufeln 33 dargestellt sind. Die Radschaufeln 33 sind teilweise in axialer Richtung gemäß dem Richtungspfeil 32 von einem mit dem Verdichterrad 1' drehfest verbundenen Abdeckelement 34 überdeckt, wodurch sich der genannte Verdichterauslassdruck sowohl auf der Rückseite 31 als auch auf einer Vorderseite 35 des Verdichterrads 1' aufprägen kann. Die daraus entstehenden Kräfte heben sich auf, wodurch das Verdichterrad 1' nicht in eine ausgeprägte Richtung gedrückt wird, was die Höhe der nötigen Steifigkeit der Magnetlagerungseinrichtung 20 bzw. analogen Lagerungseinrichtungen zur Lagerung der Hohlwelle 14 in axialer Richtung in Grenzen hält. Daher muss die Steifigkeit nicht über alle Maßen ansteigen.

Wie den Figuren 1 und 2 ebenfalls zu entnehmen ist, handelt es sich bei der Lagerung der Hohlwelle 14 bzw. des genannten Laufzeugs 26 um eine fliegende Lagerung, bei welcher auf ein Lager in axialer Richtung der Aufladeeinrichtung 17 gemäß dem Richtungspfeil 24 zwischen dem Verdichterrad 1 und dem Turbinenrad 2 verzichtet wird. In diesem Zusammenhang vorteilhaft ist es, wenn das Turbinenrad 2, welches am weitesten von der Magnetlagerungseinrichtung 20 und der Luftlagerungseinrichtung 19 entfernt ist und damit den größten Krafthebel aufweist und ebenso mit einem sehr heißen gasförmigen Medium beaufschlagt wird, aus einem keramischen Werkstoff oder aus Titanaluminid ausgebildet ist. Diese fliegende Lagerung vermeidet eine sehr starke Temperaturbelastung der Magnetlagerungseinrichtung 20 sowie der Luftlagerungseinrichtung 19, was die Ausfallwahrscheinlichkeit der Aufladeeinrichtung 17 sehr gering hält.

Die keramische Isolationsscheibe 15 ist in radialer Richtung gemäß dem Richtungspfeil 25 trennbar, wodurch erreicht wird, dass sich das Laufzeug 26 aus Verdichterrad 1, Turbinenrad 2, Hohlwelle 14 sowie dem Motorrotor 8 und dem Ringmagnet 10 als ein vormontierter Verbund in das Gehäuse 18 einbauen lässt. Dieser vormontierte Verbund lässt sich zudem vor dem Einbau gesamtheitlich wuchten, was beides den Montagekosten und damit den Gesamtkosten der Aufladeeinrichtung 17 zugute kommt. Ein einzelnes Wuchten der genannten Komponenten ist nicht vonnöten, was einen erhöhten Nacharbeitsaufwand ebenso vermeidet.

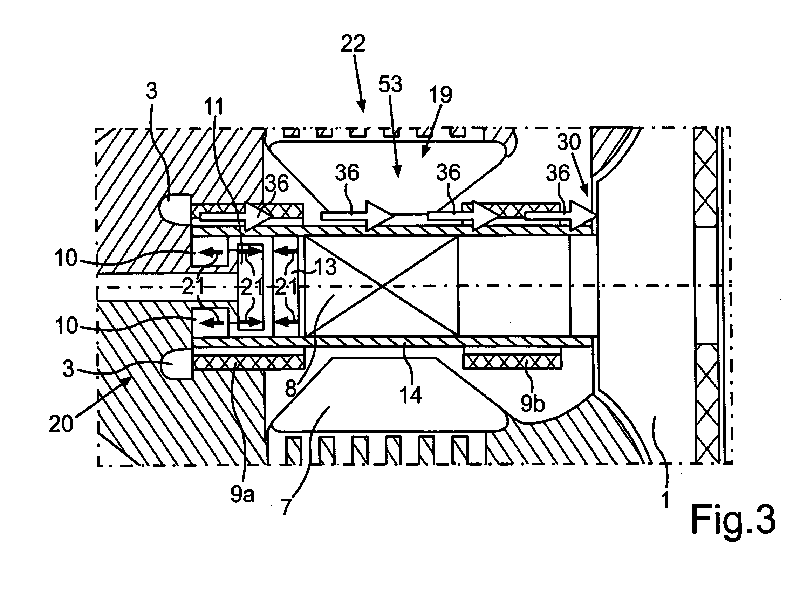

Die Fig. 3 verdeutlicht eine Kühlung der Luftlagerungseinrichtung 19 und deren Luftlager 9a und 9b. Zur Kühlung dieser ist eine Kühleinrichtung 53 vorgesehen, mittels welcher die dem Verdichterrad 1 zuzuführende und durch das Verdichterrad 1 zu verdichtende Luft vor deren Verdichtung zunächst der Luftlagerungseinrichtung 19 und anschließend dem Verdichterrad 1 zuführbar ist, wobei die so noch nicht infolge der Verdichtung erwärmte Luft die Luftlager 9a und 9b kontaktiert und besonders effizient kühlt, was dem effizienten Betrieb der Aufladeeinrichtung 17 zugute kommt.

Richtungspfeile 36 deuten dabei die Strömung der Luft, welche also als Kühlluft fungiert, an, wobei die Luft von dem Verdichterrad 1 über die Strömungskanäle 3 zu dem Verdichterradeintritt 30 angesaugt wird. Diese geförderte Kühlluft kann anschließend am Verdichtungsprozess teilnehmen. Hierdurch entsteht ein großer energetischer Vorteil gegenüber Aufladeeinrichtungen, bei denen üblicherweise verdichtete Luft über einen Zwischenkühler geleitet wird und dann entsprechenden Lagern zugeführt wird. Durch die in der Fig. 3 gezeigte Kühleinrichtung 53 ist zudem der Motorrotor 8 zu kühlen, wodurch eine mögliche Demagnetisierung bei zu hohen Rotorverlusten verhindert werden kann.

Wie der Fig. 3 weiterhin zu entnehmen ist, ist der Strömungskanal 3 insbesondere im Bereich der Magnetlagerungseinrichtung 20 radial zur Hohlwelle 14 ausgebildet.

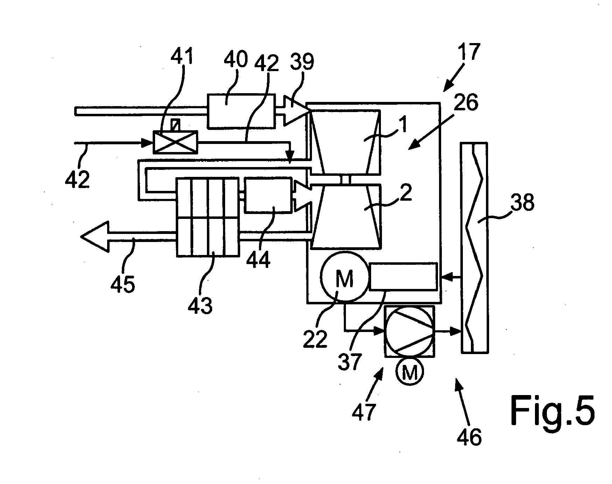

Die Fig. 5 zeigt schematisch einen Anwendungsfall, bei welchem die Aufladeeinrichtung 17 in Form des elektrisch angetriebenen Turboladers einsetzbar ist. Die Fig. 5 zeigt schematisch den Einsatz der Aufladeeinrichtung 17 als elektrisch angetriebener Turbolader im Rahmen eines Reichweitenvergrößerers eines Personenkraftwagens in Form eines Hybrid-Fahrzeugs, wobei der elektrische Motor 22 elektrische Energie über einen Stromrichter 37 von einer Energiespeichereinrichtung bezieht und somit das Laufzeug 26 antreiben kann. Mittels des Verdichterrads 1 wird gemäß einem Richtungspfeil 39 angesaugte und durch einen Luftfilter 40 gefilterte Luft verdichtet, über eine Ventileinrichtung 41 gemäß Richtungspfeilen 42 mit Kraftstoff beaufschlagt und mittels eines Rekuperators 43 vorgewärmt. Das vorgewärmte Luft-Kraftstoff-Gemisch wird anschließend in einer Brennkammer 44 entzündet und verbrannt, woraufhin das so entstandene, heiße Medium dem Turbinenrad 2 zugeführt wird, das ebenso das Laufzeug 26 antreiben kann.

Anschließend strömt das heiße Medium aus der Turbine hinaus, woraufhin mittels des Rekuperators 43 ein Wärmeübergang von dem heißen Medium an das vorzuwärmende Gemisch aus Luft und Kraftstoff stattfindet, bevor das dann abgekühlte Medium gemäß einem Richtungspfeil 45 aus dem Rekuperator ausströmt.

Der elektrische Motor 22 sowie der Stromrichter 37 werden mittels einer Kühlflüssigkeit gekühlt, die in einem Kreislauf 46 zirkuliert. Die Zirkulation der Kühlflüssigkeit wird dabei durch eine Pumpe 47 gewährleistet, die die Kühlflüssigkeit von einem Kühler 38, welcher die Kühlflüssigkeit abkühlt, in den Stromrichter 37 und den elektrischen Motor 22 pumpt, wobei ein Wärmeübergang von dem warmen elektrischen Motor 22 und dem warmen Stromrichter 37 an die kühle Kühlflüssigkeit stattfindet. Anschließend wird die so erwärmte Kühlflüssigkeit mittels der Pumpe 47 wieder zurück in den Kühler 38 gepumpt, wo ein umgekehrter Wärmeübergang zur Kühlung der Kühlflüssigkeit stattfindet zur Komplettierung des Kreislaufs 46.

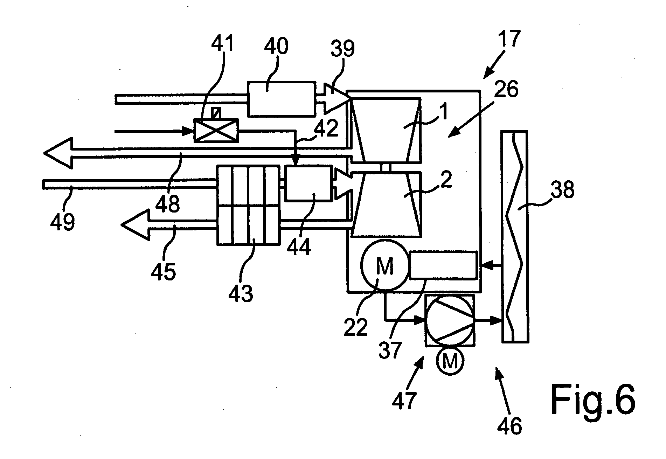

Analog verhält es sich bei dem in der Fig. 6 gezeigten Anwendungsfall, bei welchem mittels der Aufladeeinrichtung 17 die angesaugte Luft verdichtet und anschließend gemäß einem Richtungspfeil 48 einer Brennstoffzelle zugeführt wird. Die Turbine wird dabei gemäß einem Richtungspfeil 48 mit Abgas, also Wasserdampf mit ca. 10% Sauerstoff und 79% Stickstoff, der Brennstoffzelle beaufschlagt, welche mittels der Rekuperators 43 zunächst vorgewärmt wird und anschließend in die Brennkammer 44 strömt, wo sie mit einem Kraftstoff in Form von Wasserstoff beaufschlagt wird. In der Brennkammer 44 erfolgt dann eine Verbrennung des so entstandenen Gemisches, woraufhin dieses heiße Medium dem Turbinenrad 2 der Aufladeeinrichtung 17 zugeführt und die Turbine 2 mit dem heißen Medium beaufschlagt wird.

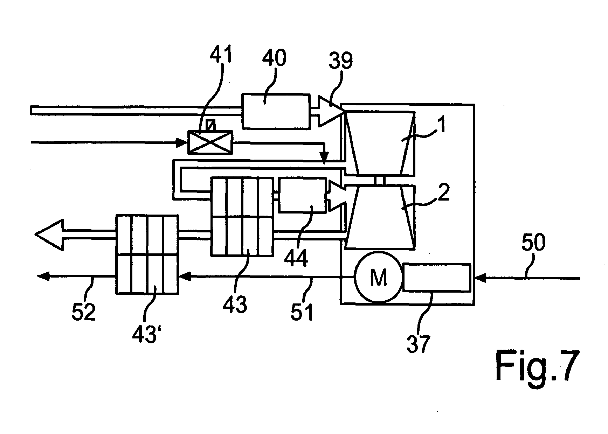

Die Fig. 7 zeigt in einer schematischen Darstellung einen weiteren Anwendungsfall, bei welchem der Stromrichter 37 sowie der elektrische Motor 22 derart gekühlt werden, dass diesen gemäß einem Richtungspfeil 50 eine Flüssigkeit eines Heizungsrücklaufs zugeführt wird, wobei diese Flüssigkeit anschließend gemäß einem Richtungspfeil 51 einem weiteren Rekuperator 43' zugeführt wird, wodurch die Flüssigkeit mittels des Rekuperators 43' infolge eines Wärmeübergangs von dem das Turbinenrad 2 verlassenden Medium auf die Flüssigkeit vorgewärmt und schließlich einem Heizungsvorlauf gemäß einem Richtungspfeil 52 zugeführt wird. Bei dem Rekuperator 43' handelt es sich somit um einen Abgaswärmetauscher, der die aus dem Heizungsrücklauf stammende und in den Heizungsvorlauf zu führende Flüssigkeit erwärmt, wodurch ein Ausgangswärmeniveau bereitgestellt ist, von dem aus eine entsprechende Heizung zur weiteren Aufwärmung der Flüssigkeit dieser Flüssigkeit nur noch eine geringe Energie zugeführt werden muss, um schließlich eine gewünschte Temperatur der Flüssigkeit zur Aufwärmung eines Innenraums eines Fahrzeugs einzustellen.

Wie den Fig. 5 bis 7 zu entnehmen ist, stellen die Anwendungsfälle Systeme mit der Aufladeeinrichtung 17 dar, welche die freien Energien effizient nutzen zur Darstellung eines großen Wirkungsgrads eines entsprechenden Fahrzeugs. Dabei ist die Aufladeeinrichtung 17 in Form des elektrisch angetriebenen Turboladers insbesondere für Brennstoffzellensysteme mit heißer Expansion einsetzbar, wobei durch die Aufladeeinrichtung 17 infolge der speziellen Vorkehrungen ein besonders effizienter Betrieb ihrer selbst als auch der zugeordneten Systeme ermöglicht ist.

## Patentansprüche

1. Aufladeeinrichtung (17) zum Verdichten eines gasförmigen Mediums, insbesondere für eine Brennstoffzelle, mit einem Gehäuse (18) und mit einer von dem Gehäuse (18) aufgenommenen Welle (14), welche in dem Gehäuse (18) radial mittels einer Luftlagerungseinrichtung (9a, 9b) gelagert ist, wobei die Welle (14) in dem Gehäuse (18) axial ausschliesslich mittels einer Magnetlagerungseinrichtung (20) gelagert ist, wobei die Magnetlagerungseinrichtung (20) zumindest einen mit der Welle (14) drehfest verbundenen Permanentmagneten (10), sowie zumindest einen an dem Gehäuse (18) festgelegten Permanentmagneten (11 ,13) umfasst,
**dadurch gekennzeichnet**,
dass der am Gehäuse festgelegte Permanentmagnet (11, 13) mittels eines Gewindebolzens (12) an dem Gehäuse (18) festgelegt ist, und dass die Magnetlagerungseinrichtung in einem Endabschnitt der Welle angeordnet ist, welcher gegenüber eines weiteren Endabschnittes der Welle liegt, in welchem ein Laufrad drehfest mit dieser verbunden angeordnet ist.

2. Aufladeeinrichtung (17) nach Anspruch 1 mit einem von dem Gehäuse (18) aufgenommenen Laufzeug (26), welches die Welle (14) und zumindest zwei mit dieser drehfest verbundene Laufräder (1 ,2) umfasst und welches in dem Gehäuse (18) mittels der Luftlagerungseinrichtung (9a, 9b) gelagert ist, wobei das Laufzeug (26) fliegend in dem Gehäuse (18) gelagert ist.

3. Aufladeeinrichtung (17) nach Anspruch 2, **dadurch gekennzeichnet, dass** ein Laufrad (1) der Laufräder (1 ,2) als Verdichterrad (1) und das andere der Laufräder (1 ,2) als Turbinenrad (2) ausgebildet ist.

4. Aufladeeinrichtung (17) gemäss einem der vorhergehenden Ansprüche mit einem von dem Gehäuse (18) aufgenommenen Laufzeug (26), welches die Welle (14) und zumindest ein mit dieser drehfest verbundenes Verdichterrad (1) umfasst und welches in dem Gehäuse (18) mittels der Luftlagerungseinrichtung (9a, 9b) gelagert ist, wobei eine Kühleinrichtung (53) vorgesehen ist, mittels welcher das dem Verdichterrad (1) zuzuführende, gasförmige Medium vor dessen Verdichtung zunächst der Lagerungseinrichtung (19) und anschliessend dem Verdichterrad (1) zuführbar ist.

5. Aufladeeinrichtung (17) nach Anspruch 4, **dadurch gekennzeichnet, dass** die Kühleinrichtung (53) zumindest einen Strömungskanal (3) aufweist, welcher in axialer Richtung (24) der Welle (14) stromauf der Lagerungseinrichtung (19) angeordnet ist.

6. Aufladeeinrichtung (17) gemäss einem der vorhergehenden Ansprüche, mit einem Verdichterrad (1'), das eine Mehrzahl von auf einer in axialer Richtung (32) des Verdichterrads (1') weisenden Stirnseite des Verdichterrads angeordneten Radschaufeln (33) aufweist, wobei die Radschaufeln (33) zumindest teilweise in axialer Richtung (32) des Verdichterrads (1') von zumindest einem mit dem Verdichterrad (1') drehfest verbundenen Abdeckelement (34) überdeckt sind.

7. Aufladeeinrichtung (17) nach Anspruch 6, **dadurch gekennzeichnet, dass** das Abdeckelement (34) des Verdichterrades (1') einstückig mit dem Verdichterrad (1') ausgebildet ist.

8. Aufladeeinrichtung (17) gemäss einem der vorhergehenden Ansprüche, mit einem Turbinenrad (2) für eine Turbine der Aufladeeinrichtung (17), welches mit einem gasförmigen Medium, insbesondere Abgas einer Brennstoffzelle, beaufschlagbar ist, wobei das Turbinenrad (2) im Wesentlichen aus einem keramischen Werkstoff oder aus Titanaluminid ausgebildet ist.

## Claims

1. A supercharging device (17) for compressing a gaseous medium, in particular for a fuel cell, having a housing (18) and having a shaft (14) which is received by the housing (18) and which is radially supported in the housing (18) by means of an air bearing device (9a, 9b), wherein the shaft (14) is axially supported in the housing (18) only by means of a magnetic bearing device (20), wherein the magnetic bearing device (20) comprises at least one permanent magnet (10) rotationally fixedly connected to the shaft (14) and at least one permanent magnet (11, 13) fixed to the housing (18),
**characterised in that**
the permanent magnet (11, 13) fixed to the housing is fixed to the housing (18) by means of a threaded bolt (12); and **in that** the magnetic bearing device is arranged in an end section of the shaft which lies opposite a further end section of the shaft in which a rotor is rotationally fixedly connected thereto.

2. A supercharging device (17) in accordance with claim 1, comprising a running gear (26) which is received in the housing (18), which comprises the shaft (14) and at least two rotors (1, 2) rotationally fixedly connected thereto and which is supported in the housing (18) by means of the air bearing device (9a, 9b), wherein the running gear (26) is mounted in an overhung position in the housing (18).

3. A supercharging device (17) in accordance with claim 2, **characterised in that** one rotor (1) of the rotors (1, 2) is configured as a compressor wheel (1) and the other one of the rotors (1, 2) is configured as a turbine wheel (2).

4. A supercharging device (17) in accordance with one of the preceding claims comprising a running gear (26) which is received by the housing (18), which comprises the shaft (14) and at least one compressor wheel (1) rotationally fixedly connected thereto and which is supported in the housing (18) by means of the air bearing device (9a, 9b), wherein a cooling device (53) is provided by means of which the gaseous medium to be supplied to the compressor wheel (1) can first be supplied to the bearing device (19) before its compression and subsequently to the compressor wheel (1).

5. A supercharging device (17) in accordance with claim 4, **characterised in that** the cooling device (53) has at least one flow channel (3) which is arranged upstream of the bearing device (19) in the axial direction (24) of the shaft (14).

6. A supercharging device (17) in accordance with one of the preceding claims, comprising a compressor wheel (1') which has a plurality of wheel blades (33) arranged on an end side of the compressor wheel facing in the axial direction (32) of the compressor wheel (1'), wherein the wheel blades (33) are covered at least partially in the axial direction (32) of the compressor wheel (1') by at least one cover element (34) rotationally fixedly connected to the compressor wheel (1').

7. A supercharging device (17) in accordance with claim 6, **characterised in that** the cover element (34) of the compressor wheel (1') is formed in one piece with the compressor wheel (1').

8. A supercharging device (17) in accordance with one of the preceding claims, comprising a turbine wheel (2) for a turbine of the supercharging device (17), said turbine wheel being able to be acted on by a gaseous medium, in particular an exhaust gas of a fuel cell, wherein the turbine wheel (2) is substantially formed from a ceramic material or from titanium aluminide.

## Revendications

1. Dispositif de suralimentation (17) destiné à comprimer un milieu gazeux, en particulier pour une pile à combustible, comprenant un carter (18) et un arbre (14) logé dans le carter (18), qui est monté radialement dans le carter (18) au moyen d'un dispositif de palier pneumatique (9a, 9b), l'arbre (14) étant monté axialement dans le carter (18) exclusivement au moyen d'un dispositif de palier magnétique (20), le dispositif de palier magnétique (20) comprenant au moins un aimant permanent (10) relié solidaire en rotation à l'arbre (14) ainsi qu'au moins un aimant permanent (11, 13) fixé sur le carter (18),
**caractérisé en ce que**
l'aimant permanent (11, 13) fixé sur le carter est fixé sur le carter (18) au moyen d'un boulon fileté (12), et **en ce que** le dispositif de palier magnétique est disposé dans une partie d'extrémité de l'arbre, qui se trouve opposée à une autre partie d'extrémité de l'arbre, dans laquelle une roue mobile est disposée reliée solidaire en rotation à celui-ci.

2. Dispositif de suralimentation (17) selon la revendication 1, comprenant un ensemble roue (26) logé dans le carter (18), qui comprend l'arbre (14) et au moins deux roues mobiles (1, 2) reliées solidaires en rotation à celui-ci et qui est monté dans le carter (18) au moyen du dispositif de palier pneumatique (9a, 9b), l'ensemble roue (26) étant monté volant dans le carter (18).

3. Dispositif de suralimentation (17) selon la revendication 2, **caractérisé en ce que** l'une (1) des roues mobiles (1, 2) est réalisée en tant que roue de compresseur (1) et l'autre des roues mobiles (1, 2) en tant que roue de turbine (2).

4. Dispositif de suralimentation (17) selon l'une des revendications précédentes, comprenant un ensemble roue (26) logé dans le carter (18), qui comprend l'arbre (14) et au moins une roue de compresseur (1) reliée solidaire en rotation à celui-ci et qui est monté dans le carter (18) au moyen du dispositif de palier pneumatique (9a, 9b), un dispositif de refroidissement (53) étant prévu, au moyen duquel le milieu gazeux à alimenter vers la roue de compresseur (1) peut être alimenté avant sa compression d'abord vers le dispositif de palier (19) puis vers la roue de compresseur (1).

5. Dispositif de suralimentation (17) selon la revendication 4, **caractérisé en ce que** le dispositif de refroidissement (53) comporte au moins un conduit d'écoulement (3) qui est disposé dans la direction axiale (24) de l'arbre (14) en amont du dispositif de palier (19).

6. Dispositif de suralimentation (17) selon l'une des revendications précédentes, comprenant une roue de compresseur (1'), qui comporte une pluralité de pales de roue (33) disposées sur un côté frontal de la roue de compresseur orientée dans la direction axiale (32) de la roue de compresseur (1'), les pales de roue (33) étant recouvertes au moins partiellement dans la direction axiale (32) de la roue de compresseur (1') par au moins un élément de recouvrement (34) relié solidaire en rotation à la roue de compresseur (1').

7. Dispositif de suralimentation (17) selon la revendication 6, **caractérisé en ce que** l'élément de recouvrement (34) de la roue de compresseur (1') est réalisé d'un seul tenant avec la roue de compresseur (1').

8. Dispositif de suralimentation (17) selon l'une des revendications précédentes, comprenant une roue de turbine (2) pour une turbine du dispositif de suralimentation (17), qui peut être soumise à l'action d'un milieu gazeux, en particulier le gaz d'échappement d'une pile à combustible, la roue de turbine (2) étant réalisée essentiellement en un matériau céramique ou en aluminure de titane.
